# EUROPÄISCHE PATENTANMELDUNG

(11) **EP 1 156 075 A2**
(43) Veröffentlichungstag der Anmeldung: **21.11.2001**
(21) Anmeldenummer: 01111849.4
(22) Anmeldetag: 16.05.2001
(51) Int. Cl.: C08J 7/04, C09D 183/00

(54) **Verfahren zur Oberflächenbehandlung von Polyolefinen zur Herabsetzung der Haft-und Gleitreibungskräfte**

(30) Priorität: 17.05.2000 DE 10024365
(71) Anmelder: Schott Glas, 55122 Mainz (DE); Max-Planck-Institut für Polymerforschung, 55128 Mainz (DE)
(72) Erfinder: Borens, Manfred, 55126 Mainz (DE); Heinz, Jochen, Dr., 55578 Vendersheim (DE); Rühe, Jürgen, Dr., 79356 Eichstetten (DE); Stöhr, Torsten, 55118 Mainz (DE)
(74) Vertreter: Fuchs Mehler Weiss & Fritzsche, Patentanwälte

(57) **Zusammenfassung**

Es wird ein Gegenstand mit einer reibungsverringernden Oberfläche beschrieben, der ein eine Oberfläche aufweisendes polymeres Basissubstrat mit einer Beschichtung aus einem im Basissubstrat verankerten reibungsverringerndem Material umfasst und der dadurch gekennzeichnet ist, daß das reibungsverringernde Material ein Polymer umfaßt, das zumindest einen ersten und einen zweiten Polymerblock aufweist, wobei der erste Polymerblock ein Ankerblock ist, der mit dem Basismaterial mischbare und/oder festverbindbare Einheiten enthält, und der zweite Polymerblock ein Bojenblock ist, der ein Polysiloxan und/oder einen Kohlenwasserstoff enthält.

## Beschreibung

Die Erfindung betrifft einen Werkstoff bzw. einen Gegenstand mit einer reibungsverringernden Oberfläche, die auf einem Basissubstrat eine Beschichtung aus einem reibungsverringernden Material enthält, sowie ein Verfahren zu seiner Herstellung.

Bei vielen Prozessen, bei denen sich Teile gegeneinander bewegen, ist es notwendig, die Haft- und/oder Gleitreibung zwischen den jeweiligen Reibepartnern zu verringern. Dies wird beispielsweise dadurch erreicht, daß die jeweiligen aneinander gleitenden Oberflächen mit einem Schmiermittel überzogen werden.

Auch die bei aneinander gleitenden Kunststoffen auftretende Haft- und Gleitreibung stellt in der Technik ein großes Problem dar. So ist z. B. bei Spritzen, insbesondere bei Fertigspritzen in der Medizin das Problem bekannt, daß nach längerer Lagerung Spritzenkolben und Spritzenzylinder fest aneinander haften, so daß bei einer Verabreichung solcher Spritzen zu Beginn eine große Kraft aufgewendet werden muß, um den Kolben in Bewegung zu setzen, d. h. die zu Beginn große Haftreibung muß erst durch eine erhöhte Kraft überwunden werden. Ist die Haftreibung erst einmal überwunden, führt dies zu einer plötzlich beschleunigten Bewegung des Kolbens, was wiederum zu einem verstärkten Ausstoß des Spritzeninneren führt. Verringert daraufhin ein die Spritze verabreichender Arzt die Kraft auf den Kolben, um den plötzlichen Ausstoß des zu verabreichenden Medikaments zu verringern, bleibt der Spritzenkolben wieder stecken und das ganze beginnt von vorne. Auf diese Weise ist es nicht oder nur sehr schwer möglich, den Inhalt einer Spritze einigermaßen gleichmäßig zu verabreichen. In vielen Ländern bestehen deshalb Vorschriften, welche eine Höchstgrenze für die auszuübende Kraft beim Verabreichen einer Spritze regeln.

Es ist daher bereits mehrfach versucht worden, die Oberfläche von Spritzenmaterial derart zu behandeln, daß die Haft- und Gleitreibung verringert wird. Es beschreibt beispielsweise die DE-C-30 45 950 ein Verfahren zum Aufbringen einer Silikonschicht auf von einer Kolbendichtung reibend beanspruchten Innenfläche von Spritzenzylindern, wobei ein flüssiges Silikon mittels einem Übertragungselement aufgetragen wird.

In der WO 94/13345 wird das Überziehen des Spritzenkolbens mit einem festen Schmiermittelfilm beschrieben, der aus einem Tetrafluorethylenharz, einem Polyethylenharz oder Gemischen davon besteht. Durch das Beschichten des Kolbens soll eine bei der Sterilisation auftretende unterschiedliche Ausdehnung von Kolbenkörper und Gleitüberzug vermieden werden, was häufig ein Delaminieren bedingt.

Die US-A-5,338,312 beschreibt einen Gegenstand, der aneinander gleitende Oberflächen mit Schmiermitteleigenschaften aufweist. Dabei wird auf die Oberfläche des Gegenstandes, wie beispielsweise einer Spritzenhülse, eine erste vernetzte Schmiermittelbasis aufgetragen, welche dann mit einem zweiten Schmiermittel überzogen wird. Dabei wird die erste Schmiermittelbasis gleichmäßig auf die Oberfläche des Gegenstandes aufgetragen und dann mittels eines Plasmas zu einer hochviskosen bzw. einer im wesentlichen festen Schmiermittelbasis vernetzt. Auf diese Schmiermittelbasis wird dann ein zweites Schmiermittel aufgetragen. Auf diese Weise sollen die eingangs geschilderten Nachteile vermieden werden. Als Schmiermittelbasisschicht wird dabei ein hochvernetztes oder geliertes Material aus einem Kohlenwasserstofföl, Pflanzenöl wie Erdnußöl, Mineralöle, Wachse, Fette und vorzugsweise ein Silikonöl verwendet. Als zweite Ölschicht wird vorzugsweise ein herkömmliches Silikonöl mit einer Viskosität von 100 bis 60 000 cs verwendet, das in einer Lösung eines leicht verdampfbaren Lösungsmittels aufgetragen wird.

Schließlich beschreibt die EP-B 329 041 ein Verfahren zur Herstellung von Oberflächen mit einer verringerten Reibung, bei dem die Oberflächen mit einem Plasma aus einem organischen Monomer behandelt werden, wodurch eine Polymerschicht auf der Oberfläche abgeschieden wird. Die Polymerschicht, welche selbst keine Schmiermitteleigenschaften aufweist, wird dann durch Auftragen eines Silikonfilmes gleitend gemacht. Eine feste Verbindung des Silkonöls mit der Oberflächenbasis findet dabei nicht statt.

Die WO-96/34926 beschreibt ein Verfahren zur Behandlung eines elastomeren Verpackungselementes, beispielsweise ein Verschlußelement, insbesondere für medizinische oder pharmazeutische Verwendungen, bei dem ein elastomeres Basismaterial, mit einem polymeren Film beschichtet wird, der durch eine Polymerisation von Organosiloxanen und Organosilazanen in kaltem Plasma, vorzugsweise einem Stickstoffplasma abgeschieden wird.

Die zuvor genannten Verfahren weisen jedoch den Nachteil auf, daß die Silikonöle lediglich an die Oberfläche des Gegenstandes adsorptiv gebunden sind und es daher nicht sichergestellt ist, daß sich beim Lagern, Sterilisieren oder beim Verabreichen der Spritze die Silikone vom Untergrund lösen und als Verunreinigung in das mit der Spritze zu verabreichende Material in den Körper gelangen. Ein weiteres Problem besteht darin, daß sich bei Beschichtungen mit einer beispielsweise mittels Plasma abgeschiedenen Schmiermittelschicht diese mit der Zeit und beim Gebrauch vom Untergrund löst und damit ihre Wirkung verliert und darüber hinaus ebenfalls in das mit der Spritze zu verabreichende Material gelangt.

Die Erfindung hat daher zum Ziel, die zuvor genannten Nachteile des Standes der Technik zu überwinden und einen Gegenstand, bzw. einen Werkstoff oder eine Zusammensetzung bereitzustellen, der eine reibungsverringernde Oberfläche aufweist, die nicht nur gute Gleiteigenschaften vermittelt, sondern die sich auch bei längerem Lagern und beim Gebrauch nicht von der Oberfläche ablöst. Dieses Ziel wird nun mit den in den Ansprüchen definierten Merkmalen erreicht.

Die Erfindung betrifft daher einen Werkstoff, insbesondere einen Gegenstand, dessen Oberfläche eine laminatartige Beschichtung aufweist, welche fest mit dem Basissubstrat verbunden ist, wobei die reibungsverringernde Beschichtung ein Polymer umfaßt, das mindestens einen ersten und einen zweiten Polymerblock aufweist, wobei der erste Polymerblock mit dem Basismaterial mischbare und/oder fest verbindbare Einheiten aufweist und wobei der zweite Polymerblock Polysilan, Polysiloxan und/oder einen fettigen bzw. öligen Kohlenwasserstoff umfaßt. Der erste Polymerblock reicht in das Basissubstrat hinein bzw. ist darin fest eingebettet. Er bewirkt dadurch eine Verankerung der reibungsverringernden Schicht im Basissubstrat und wird deshalb auch als Ankerblock bezeichnet. Der zweite Polymerblock hängt am Ankerblock fest und stellt eine frei schwingende Boje dar, welche die Verbesserung der Gleiteigenschaften bewirkt. Sie wird als Bojenblock bezeichnet.

Zweckmäßige Substratmaterialien sind Kunststoffe, d. h. Polyreaktionsprodukte, die aus sich wiederholenden konstitutionellen Einheiten aufgebaut sind. Bevorzugte Kunststoffe sind Thermoplasten, Elastomere und auch Duroplasten, insbesondere Polypropylen, Polyethylen, Polybutylen, Polyethylenterephtalat, Polyethylennaphthalat sowie deren fluorierte Derivate sowie Ethylenpropylencopolymere (FEP) oder auch Polytetrafluorethylene (PTFE). Des weiteren sind geeignet abgewandelte Naturstoffe wie Caseinkunststoffe, Cellulosenitrate, Acetate und Ether sowie entsprechende Ester und Mischester, Phenolharze und Harnstoffharze, Melaminharze, Polyamide, Polycarbonate, Polyester, Polyphenylenoxide, Polysulfone, Polyvinylacetate sowie Polyacrylate wie Polymethylmethacrylat oder Polyacrylnitril, Polystyrole, Polyvinylacetate sowie Epoxidharz und Polyurethane, Polyimide, butadienmodifizierte Polystyrole, Aminoplaste wie Melamin und Harnstofformaldehydharze. Geeignete Basissubstrate sind beispielsweise Polyolefine, insbesondere amorphes Polyolefin, wie es z. B. von B.F. Goodrich, Brecksville, Ohio, unter dem Handelsnamen Zeonex® vertrieben wird, oder Daikyo Resin CZ® von Daikyo Seiko LTD, Japan, bzw. Topas® , ein Copolymer aus Cycloolefinen und Alkylen, insbesondere Ethylen welches von Ticona, Deutschland, erhältlich ist.

Das Polymer, welches erfindungsgemäß als reibungsverringerndes Material mit der Substratoberfläche des erfindungsgemäßen Gegenstandes verbunden ist, ist vorzugsweise ein Blockcopolymer, das mindestens einen ersten Anker- und einen zweiten Bojen-Polymerblock aufweist.

Hierbei ist der erste Polymerblock ein Polymer, welches im Substrat löslich bzw. mit diesem im flüssigen Zustand mischbar oder auch in die Substratbasis eindiffundierbar ist. Vorzugsweise ist der zweite Polymerblock mit dem Polymer des Basissubstrates identisch oder zumindest ähnlich.

Der zweite Block (Bojenblock) im reibungsverringernden Polymer ist ein Silikon und/oder ein öliger bzw. fettiger Kohlenwasserstoff. Bevorzugte Silikone sind Polysiloxane und Organopolysiloxane und Polyorganosiloxane, die vorzugsweise mit Wasserstoff, Methyl-, Ethyl-, Propyl- oder Butylgruppen substituiert sind, wobei Methylgruppen und Ethylgruppen bevorzugt sind (der allgemeinen Formel [R₂Si-O]ₓ oder [R₂Si-NR]ₓ). Besonders bevorzugt ist Dimeticon. Weitere geeignete zweite Polymerblöcke sind langkettige ölige Kohlenwasserstoffe wie fette Öle, Parafine, Wachse, sowie Fettsäuren, Fettalkohole, Fettester sowie insbesondere Fettsäureglyceridester und Lipide, wobei die Kettenlänge des Kohlenwasserstoffes größer als 10, vorzugsweise größer als 16, insbesondere größer als 20 Kohlenstoffatome ist, die sowohl gesättigt als auch ungesättigt sein können. Erfindungsgemäß sind besonders solche Kohlenwasserstoffreste geeignet, welche als Reinsubstanz flüssig sind, d. h. welche ein Molekulargewicht aufweisen, das nicht größer als 400, insbesondere kleiner als 250, insbesondere kleiner als 200 und größer als 50, vorzugsweise größer als 70 ist. Geeignete Kohlenwasserstoffe sind solche mit C₈-C₂₅, insbesondere C₁₀-C₂₀.

Um sicherzustellen, daß die Oberfläche gleichförmig beschichtet ist, weist das reibungsverringernde Polymer vorzugsweise eine chromophore Gruppe auf. Bevorzugte chromophore Gruppen sind fluoreszierende und phosphoreszierende Gruppen. Geeignete fluoreszierende Gruppen sind üblicherweise solche, die konjugierte delokalisierte π-Elektronenpaare aufweisen und die mittels ultraviolettem Licht vorzugsweise zwischen 230 und 300 *µ*m angeregt werden können. Geeignete Fluorogene sind Cumarin und/oder Naphtholgruppen aufweisende Derivate sowie Nitro- und/oder Aminoaromaten wie Nitrobenzol oder Nitrotoluolderivate. Weitere geeignete Fluorochrome sind Fluorescein, Acridinorange, Tetracycline, Boferine, etc. In einer zweckmäßigen Ausführungsform enthalten die Fluorochrome geeignete Fluoreszenzverstärker.

Weitere geeignete chromophore Gruppen sind solche, die eine bläuliche, insbesondere eine schwach bläuliche Farbe erzeugen. Derartige chromophore Guppen und ihr Einbau in polymere Makromoleküle sind dem Fachmann bekannt und benötigen keine weitere Erläuterung.

In einer weiteren bevorzugten Ausführungsform enthält die reibungsverringernde Polymerschicht gelöste Öle. Derartige Öle dringen in die molekulare Schicht des zweiten bzw. Bojen-Polymerblockes ein und quellen diese auf. Dabei werden die Öle üblicherweise im polymeren Netzwerk der Bojen-Polymerblöcke festgehalten, so daß die Gefahr eines Herauslösens des Öles aus diesem Netzwerk äußerst minimiert ist. Bevorzugte Öle sind natürliche Öle, insbesondere pharmazeutisch verträgliche Öle wie Maisöl, Olivenöl, Sojaöl, Erdnußöl, Rizinusöl, Rüböl, Mandelöl, Hanföl, Sonnenblumenöl, Knochenöl, Rindertalg, Hammeltalg, Schweineschmalz, Walfischtran, etc. Weitere bevorzugte Öle sind Glyceride, Ester und Etherderivate, die C₃-C₂₅, insbesondere die Seitenketten mit einer Länge von C₁₀-C₂₀ Kohlenstoffatome aufweisen.

Besonders bevorzugt ist es, die Schicht aus dem reibungsverringernden Material mit Silikonen, insbesondere mit pharmazeutisch verträglichen Silikonen, wie beispielsweise Dimeticon, aufzuquellen.

Die erfindungsgemäße reibungsverringernde Polymerbeschichtung ist vorzugsweise vernetzt. Eine bevorzugte Vernetzung ist intermolekular, wobei die Vernetzung vorzugsweise zwischen den ersten Polymerblöcken von benachbarten Polymeren vorliegt. Die Vernetzung ist üblicherweise eine chemische Vernetzung zwischen zwei benachbarten Polymeren. Derartige Vernetzungen sind mittels reaktiv aktivierbaren Gruppen durchführbar. Eine bevorzugte Vernetzungsmethode ist die Anwendung von Plasma, insbesondere von kaltem Plasma. Erfindungsgemäß ist es jedoch auch möglich, die ersten Polymerblöcke untereinander zu verschlaufen, so daß sie wie ein Wollknäuel oder wie ein Gewirke untereinander verfilzt sind. Durch die Quervernetzung bzw. Verschlaufung wird die Stabilität der reibungsverringernden Polymeroberfläche weiter erhöht.

Bevorzugte erfindungsgemäße Gegenstände sind Spritzen, Nadeln, insbesondere Kunststoffnadeln wie Braunülen für Infusionen, Katheter, Büretten, Endoskope sowie Vorrichtungen für die minimalinvasive Chirurgie, beschichtete Folien und Kontaktlinsen. Auch für Teile in Elektronik-Vorrichtungen sowie physikalischen Geräten wie Prismen, Linsen, Filmen, IC-Wafer, LCD-Elemente, Küvetten, Wells, Kulturschalen, CD's bzw. CD-ROM's sind die erfindungsgemäßen Werkstoffe bzw. Gegenstände verwendbar.

Die Erfindung betrifft auch die Herstellung derartiger Gegenstände oder Materialien. Dabei wird erfindungsgemäß derart vorgegangen, daß ein Blockcopolymer hergestellt wird, beispielsweise dadurch, daß man einen Ankerblock (erster Polymerblock) herstellt, der mittels einem Initiator aktiviert wird und dann mittels einer Pfropfreaktion an einen zweiten, Gleitmitteleigenschaften aufweisenden Bojen-Polymerblock kovalent verknüpft wird. Eine weitere Möglichkeit ist die Verknüpfung von Ankergruppen mit Bojenketten mittels Photoreaktionen, wie beispielsweise mittels photoreaktiven Benzophenonen wie dies von O. Prucker, C. Naumann, J. Rühe, C. Frank und W. Knoll in "Journal of the American Chemical Society" (published in 1999) veröffentlicht worden ist.

Die derart hergestellten Anker-Bojen-Blockpolymere werden auf die Oberfläche des Basissubstrates aufgetragen und wärmebehandelt. Dabei dringt der mit dem Substratpolymer mischbare Anker (erster Polymerblock) in das Substratmaterial ein, beispielsweise durch Diffusion, und ist nach dem Abkühlen bzw. Festwerden fest im Substratmaterial verankert.

Bei der Herstellung mittels Spritzgußverfahren wird in einer bevorzugten Ausführungsform die Gesenk- bzw. Formoberfläche mit den Anker-Bojen-Blockpolymeren beschichtet, beispielsweise durch Aufsprühen oder Eintauchen. Dann wird in die derart beschichtete Gesenkform das flüssige Substratpolymer eingespritzt. Dabei ordnen sich die Anker-Bojen-Blockpolymere automatisch so an, daß der Ankerteil in das eingespritzte Substratpolymer reicht und der Bojenteil vom Substrat abgewandt liegt, d. h. gegenüber der Gesenkoberfläche liegt. Dies erleichtert auch ein Entformen nach dem Auskühlen. Auch bei der Extrusion von Folien oder Fäden ist das erfindungsgemäße Verfahren anwendbar. Hierbei wird, beispielsweise um den aus dem Substratpolymer gebildeten Kern oder Folienbasis beim Extrudieren das Anker-Bojen-Blockpolymer an der Extrusionsdüse mitextrudiert und z. B. um die Folien- bzw. Fadenoberfläche herum zugeführt. Nach dem Auskühlen ist auch hier der Faden bzw. das extrudierte Filament oder die Folie an ihrer Oberfläche mit dem Gleitmittel in einer nicht ablösbaren Form beschichtet.

Die Erfindung soll durch die folgenden Beispiele näher erläutert werden:

### Beispiel 1:

### Synthese von Poly(isobutylen)-silanol

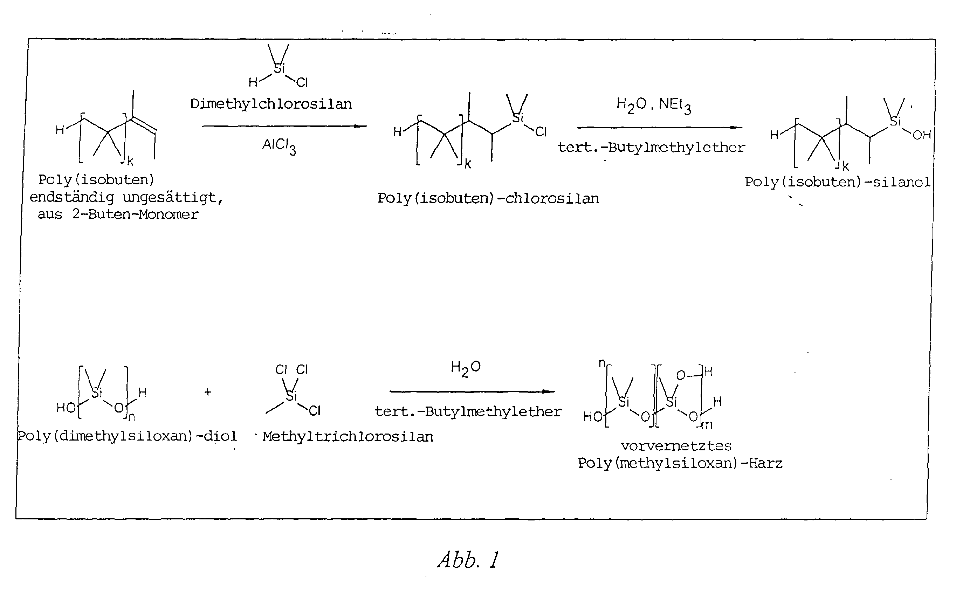

Aus Poly(isobuten) mit einem Molekulargewicht von etwa 1500 g/mol, das eine terminale Doppelbindung aufweist, wird in Gegenwart von Aluminiumtrichlorid als Katalysator mit Dimethylchlorsilan umgesetzt. Auf diese Weise wird Poly(isobuten)-chlorsilan gewonnen. Dieses wird in tert-Bulylmethylester gelöst und mit Wasser zum Poly(isobuten)-silanol hydrolysiert, wobei Triethylamin als Säurefänger zugesetzt wird. Das Reaktionsschema ist in Fig. 1 dargestellt.

### Synthese von vorvernetztem Poly(methylsiloxan)harz

Poly(dimethylsiloxan)-diol mit einem Molekulargewicht von etwa 2000 g/mol wird in tert.-Butylmethylether gelöst. Nach Zugabe von Methyltrichlorsilan wird das Gemisch mit Wasser umgesetzt, wobei vorvernetztes Poly(methylsiloxan) entsteht. Das Reaktionsschema ist in Fig. 1 dargestellt.

### Auftragung und Verankerung auf einem Poly(ethylen-statnorbornen)substrat

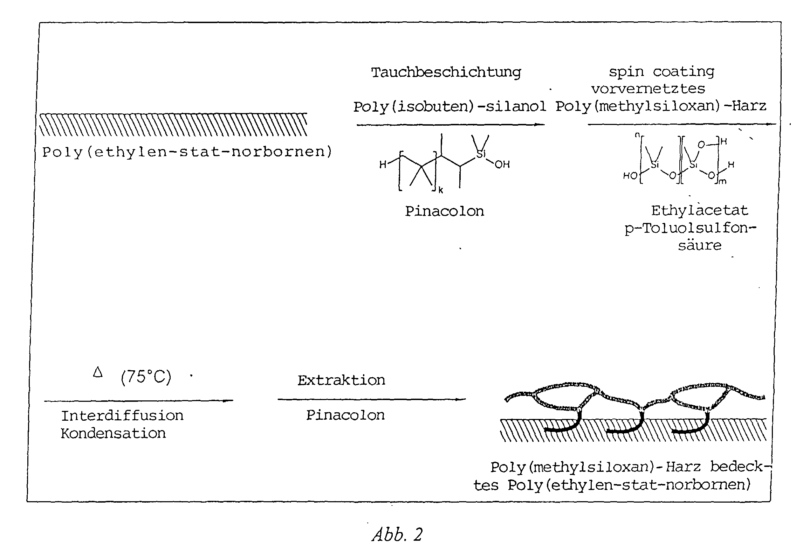

Poly(isobuten)silanol wird aus einer Lösung aus Pinacolon, das für Poly(ethylen-stat-norbornen) kein Lösungsmittel ist, mittels Eintauchen aufgetragen. Nach dem Verdampfen des Lösungsmittels wird auf diese Weise eine molekulare Schichtdicke von etwa 20Å erhalten. Anschließend wird das vorvernetzte Polymethylsiloxan aus Ethylacetat, welches weder Poly(ethylen-stat-norbornen) noch Poly(isobuten)-silanol löst, in Gegenwart von p-Toluolsäure aufgeschleudert. Dabei werden Schichtdicken von etwa 200 Å erhalten. Nach einem dreitägigen Tempern bei der Glastemperatur des Substrates (Tg Polyethylen-stat-norbornen z.B. 75°C) diffundiert der Ankerblock in das Substrat ein. Darüber hinaus wird das Bojenmaterial vernetzt. Nicht eindiffundiertes Polymer sowie nicht reagierende Substanzen werden durch Waschen bzw. Extraktion in Pinacolon entfernt. Das Reaktionsschema hierzu ist in Fig. 2 dargestellt.

### Beispiel 2:

### Synthese von Poly(isopren)-block-poly(dimethylsiloxan)

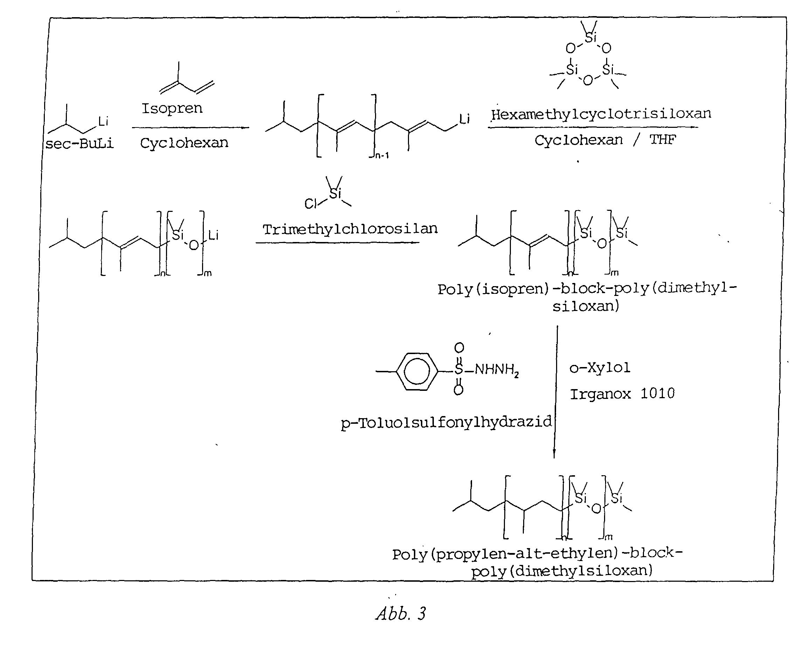

Isopren wird in Cyclohexan mittels sec-Butyllithium anionisch polymerisiert und das lebende, d.h. weiter wachstumsfähige Lithium-organische Kettenende mit Hexamethylcylotrisiloxan in einem Gemisch aus Cyclhexan/Tetrahydrofuran umgesetzt. Der Abbruch des entstehenden lebenden Kettenendes erfolgt mittels Trimethylchlorsilan. Hierbei werden die Ansätze so gewählt, daß Poly(iso-propen)-block-poly(dimethylsiloxan)-Polymere mit Molekulargewichten von etwa 20 000 g/mol und Poly(isopren)-Anteilen von 10-30 Gew.-% entstehen. Das Reaktionsschema hierzu ist in Fig. 3 dargestellt.

### Hydrierung zu Poly(ethylen-alt-propylen)-block-poly(dimethylsiloxan)

Hierbei wird Poly(ethylen-alt-propylen)-block-poly(dimetylsiloxan) in ortho-Xylol mittels p-Toluolsäurehydrazid in Gegenwart von Irganox® 1010 als Radikalfänger zu Poly(propylen-alt-ethylen) hydriert, wie in Fig. 3 dargestellt.

### Auftragung und Verankern auf der Oberfläche

Das Poly(propylen-alt-ethylen)-block-poly(dimethylsiloxan) wird aus einer Lösung in Pinacolon, das Poly(ethylen-stat-norbornen) nicht löst, auf die Substratoberfläche aufgeschleudert, wobei Schichtdicken von größer 300 Å eingestellt werden. Durch eintägiges Tempern in der Nähe der Glastemperatur Tg 75°C des Substrates Poly(ethylenstat-norbornen) wird der Poly(propylen-alt-ethylen)-Ankerblock in das Substrat eindiffundiert. Nicht eindiffundiertes und nicht reagiertes Polymer wird mittels einer Waschung bzw. 16 stündigen Extraktion in Pinacolon entfernt. Auf diese Weise wird ein fest im Substrat verankertes Anker-Bojen-Blockpolymergleitmittel erhalten.

### Beschichten während der Extrusion

Das Poly(propylen-alt-ethylen)-block-poly(dimethylsiloxan) von Beispiel 2 wird in Pinacolon gelöst. In diese Lösung wird ein Formzylinder, der in einer Gesenkform das innere Volumen einer Kunststoffspritze definiert eingetaucht und anschließend das Lösungsmittel verdunstet. Auf diese Weise wird eine ca. 300 Å dicke Polymerschicht auf den zentralen Zylinder aufgebracht. Danach wird der Zylinder in die Spritzgußform eingeführt und ein flüssiges thermoplastisches Olefin-Polymer mit amorpher Struktur (Topas®-Kunststoff, erhältlich von Ticona, Deutschland) bei ca. 200°C eingespritzt, wobei der Kunststoff innerhalb 45 sec. erstarrt. Nach einer Abkühlungsphase von weiteren 2 Minuten wird der so gebildete Spritzenrohling aus der Gesenkform entfernt und auf dem das innere Spritzenvolumen definierenden Formzylinder weiter abgekühlt. Nach einer weiteren kurzen Abkühlungsphase von einigen Minuten läßt sich der noch warme Spritzenrohling ohne weiteres von diesem Zentralzylinder abnehmen, worauf der Zylinder erneut in eine Lösung des blockpolymeren Gleitmittels eingetaucht werden kann und somit für die Herstellung eines weiteren Spritzenrohlings zur Verfügung steht.

## Patentansprüche

1. Gegenstand mit einer reibungsverringernden Oberfläche, umfassend ein eine Oberfläche aufweisendes polymeres Basissubstrat mit einer Beschichtung aus einem im Basissubstrat verankerten reibungsverringerndem Material, **dadurch gekennzeichnet, daß** das reibungsverringernde Material ein Polymer umfaßt, das zumindest einen ersten und einen zweiten Polymerblock aufweist, wobei der erste Polymerblock ein Ankerblock ist, der mit dem Basismaterial mischbare und/oder festverbindbare Einheiten enthält, und der zweite Polymerblock ein Bojenblock ist, der ein Polysiloxan und/oder einen Kohlenwasserstoff enthält.

2. Gegenstand nach Anspruch 1, **dadurch gekennzeichnet, daß** das polymere Basissubstrat ein Duroplast, Thermoplast und/oder Elastomer ist.

3. Gegenstand nach einem der vorhergehenden Ansprüche, **dadurch gekennzeichnet, daß** das Substrat Poly-(alkylen-stat-norbornen), Polyacrylat, Polyacrylnitril, Polystyrol, Polyacetal, Polyurethan, Cellulosenitrat, -acetat, -ether, Polyolefin oder Gemische hiervon umfaßt.

4. Gegenstand nach einem der vorhergehenden Ansprüche, **dadurch gekennzeichnet, daß** das Substrat Silazan oder Siloxan umfaßt.

5. Gegenstand nach einem der vorhergehenden Ansprüche, **dadurch gekennzeichnet, daß** der Kohlenwasserstoff ein Fett, fettes Öl und/oder ein Kohlenwasserstoff mit einer Kettenlänge von größer 10 Kohlenstoffatome ist.

6. Gegenstand nach einem der vorhergehenden Ansprüche, **dadurch gekennzeichnet, daß** der erste Polymerblock (Ankerblock) die gleichen Polymereinheiten aufweist wie das polymere Substrat.

7. Gegenstand nach einem der vorhergehenden Ansprüche, **dadurch gekennzeichnet, daß** das reibungsverringernde Polymer eine chromophore Guppe aufweist.

8. Gegenstand nach Anspruch 7, **dadurch gekennzeichnet, daß** die chromophore Gruppe eine fluoreszierende und/oder eine blaue Farbgruppe ist.

9. Gegenstand nach einem der vorhergehenden Ansprüche, **dadurch gekennzeichnet, daß** das reibungsverringernde Material zusätzlich ein Öl aufweist.

10. Gegenstand nach einem der vorhergehenden Ansprüche, **dadurch gekennzeichnet, daß** das Öl im gequollenen zweiten Bojenblock eingelagert ist.

11. Gegenstand nach einem der vorhergehenden Ansprüche, **dadurch gekennzeichnet, daß** das Polymer, insbesondere der zweite Polymerblock, intermolekular vernetzt ist.

12. Gegenstand nach einem der vorhergehenden Ansprüche, **dadurch gekennzeichnet, daß** der Gegenstand eine Kontaktlinse, Spritze, Nadel, Endoskop und/oder ein Manipulationsrohr für die minimalinvasive Chirurgie, ein Datenträger, eine Küvette oder Kulturschale ist.

13. Verfahren zur Herstellung eines polymeren Substrates mit einer reibungsverringernden Oberfläche, **dadurch gekennzeichnet, daß** man auf der Oberfläche eines polymeren Basissubstrates ein reibungsverringerndes Polymer verankert, das mindestens einen ersten, einen ankerbildenden und einen zweiten, eine Boje bildenden Polymerblock aufweist, wobei der eine Boje bildende Polymerblock ein Silikon und/oder ein Kohlenwasserstoff enthält und der einen Anker bildende Polymerblock mit dem Basissubstrat mischbare und/oder darin eindringbare polymere Einheiten enthält und man den Ankerblock des reibungsverringernden Polymeren in das Basissubstrat eindiffundieren läßt.

14. Verfahren nach Anspruch 13, **dadurch gekennzeichnet, daß** man den Gegenstand durch Extrusion und/oder Spritzguß herstellt und dabei die Gesenkform vor dem Einfüllen des Basissubstrates mit dem reibungsverringernden Polymer beschichtet.
